(19) Europäisches Patentamt
European Patent Office
Office européen des brevets

(11) **EP 1 236 568 B1**

(12) **EUROPÄISCHE PATENTSCHRIFT**

(45) Veröffentlichungstag und Bekanntmachung des Hinweises auf die Patenterteilung:
**14.04.2010 Patentblatt 2010/15**

(51) Int Cl.:
***B32B 27/36*** *(2006.01)*

(21) Anmeldenummer: **02003128.2**

(22) Anmeldetag: **14.02.2002**

(54) **MEHRSCHICHTIGE TRANSPARENTE, BIAXIAL ORIENTIERTE POLYESTERFOLIE**

MULTILAYER TRANSPARENT, BIAXIALLY ORIENTED POLYESTER FILM

FILM EN POLYESTER MULTICOUCHE, TRANSPARENT ET ORIENTÉ BIAXIALEMENT

(84) Benannte Vertragsstaaten:
**DE FR GB IT LU**

(30) Priorität: **26.02.2001 DE 10109216**

(43) Veröffentlichungstag der Anmeldung:
**04.09.2002 Patentblatt 2002/36**

(73) Patentinhaber: **Mitsubishi Polyester Film GmbH**
**65203 Wiesbaden (DE)**

(72) Erfinder:
 • **Pfeiffer, Herbert, Dr. Prof.**
  **55126 Mainz (DE)**
 • **Müller-Roosen, Martin, Dr.**
  **55128 Mainz (DE)**
 • **Hilkert, Gottfried, Dr.**
  **55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 502 745    EP-A- 0 514 129**
**EP-A- 0 604 057    EP-A- 0 770 473**
**EP-A- 0 952 176    US-A- 3 515 626**
**US-A- 5 294 474**

• **DATABASE WPI Section Ch, Week 200007**
**Derwent Publications Ltd., London, GB; Class**
**A23, AN 2000-075681 XP002201230 & JP 11**
**322970 A (DIAFOIL HOECHST CO LTD), 26.**
**November 1999 (1999-11-26)**
• **DATABASE WPI Section Ch, Week 199427**
**Derwent Publications Ltd., London, GB; Class**
**A23, AN 1994-221297 XP002201231 & JP 06**
**155688 A (DIAFOIL HOECHST KK), 3. Juni 1994**
**(1994-06-03)**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft eine transparente, biaxial orientierte Polyesterfolie aus mindestens einer Basisschicht (B), die mindestens 80 Gew.-% thermoplastischen Polyester enthält, und mindestens einer auf dieser Basisschicht (B) aufgebrachten transparenten Deckschicht (A). Die Erfindung betrifft weiterhin ein Verfahren für die Herstellung der Folie und ihre Verwendung.

Die Deckschicht (A) enthält ein spezielles Pigmentsystem, welches für eine verbesserte Wicklung der Folie sorgt und zu einer hochtransparenten Folie mit hochglänzender Oberfläche (A) führt. Die Folie ist für die Verwendung als Verpackungsfolie (insbesondere für die Metallisierung oder die keramische Beschichtung) und für Anwendungen im industriellen Sektor (z.B. als Substrat für Prägefolien) sehr gut geeignet.

Die Verpackungsindustrie hat einen hohen Bedarf an hochtransparenten und hochglänzenden Kunstofffolien, wie z.B. biaxial orientierten Polypropylen- oder biaxial orientierten Polyesterfolien. Solche hochtransparenten und hochglänzenden Folien zeichnen sich durch ein charakteristisches optisches Erscheinungsbild aus und verleihen dadurch z.B. der Verpackung ein besonderes attraktives und damit werbewirksames Aussehen. Problematisch an Folien, bei denen hohe Ansprüche an die Folienoptik gestellt werden, ist u.a. ihre Wickelbarkeit. Sie genügt nicht immer den gestellten Erfordernissen, insbesondere dann, wenn die Maschinenrollen zu breiten Kundenrollen mit großer Lauflänge verarbeitet werden.

Im Stand der Technik wird dargestellt, wie die optischen Eigenschaften, insbesondere der Glanz und die Trübung, biaxial orientierter Polyesterfolien verbessert werden können.

In der EP-A-0 347 646 wird eine biaxial orientierte Polyesterfolie beschrieben, die mindestens eine Deckschicht (A) aufweist, die einen Füllstoff in einer Konzentration von 0,5 bis 50 % enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über die Transparenz der Folie und den erzielten Glanz der Deckschicht A gibt die Schrift keine Auskunft. Eine nach der EP-A-0 347 646, Beispiel 1, hergestellte Folie hatte nicht die gewünschte Transparenz und nicht die gewünschte glänzende Oberfläche. Der Glanz dieser Oberfläche und die Trübung der Folie liegt außerhalb dem in dieser Schrift beanspruchten Bereich.

In der EP-A-0 514 129 wird eine transparente Mehrschichtfolie beschrieben, die ein Primärschicht-Substrat aus Polymermaterial umfasst, welches mindestens auf einer seiner Oberflächen eine Sekundärschicht aus Polymermaterial besitzt, die Glasperlen und Siliciumdioxidpartikeln in bestimmten Konzentrationen und in bestimmten Größenverteilungen aufweist. Die Sekundärschicht kann auf einer bzw. auf beiden Seiten des Primärschicht-Substrates angeordnet sein. Mit der Folie werden die Trübung und die Verarbeitungseigenschaften verbessert, eine Lehre zur Verbesserung des Glanzes und der Wickelbarkeit der Folie vermittelt die Schrift jedoch nicht.

In der EP-A-0 604 057 wird eine transparente Mehrschichtfolie beschrieben, die ein Primärschicht-Substrat aus Polymermaterial umfasst, das im wesentlichen frei ist von Füllern, welches mindestens auf einer seiner Oberflächen eine Sekundärschicht aus Polymermaterial besitzt, die als Füller Silikon-Harz in einer Konzentration von 100 bis 1000 ppm enthält, der einen mittleren Partikeldurchmesser von 1,5 bis 12,5 $\mu$m aufweist. Nachteilig an den Silikon Partikeln ist, dass diese vergleichsweise teuer sind und für den Verpackungsmarkt keine akzeptable Lösung darstellen. Außerdem neigen Folien, die mit solchen Pigmenten ausgerüstet sind, beim Wickeln zum Teleskopieren. Ebenfalls finden sich auch in dieser Schrift keinerlei Hinweise darauf, wie die Topographie einer solchen Folie für die gleichzeitige Verbesserung von Glanz und Wickelbarkeit eingestellt werden soll.

Die DE-A-16 94 404 beschreibt einen Schichtstoff mit einer Mehrzahl von Schichten eines orientierten kristallisierbaren thermoplastischen Filmes, worin mindestens eine der äußeren Schichten einen Zusatz enthält. Die Zusätze sind übliche inerte anorganische oder organische Partikel, die im Falle von inerten Partikeln wie $SiO_2$ in einer Konzen-tration von 1 bis 25 Gew.-% den äußeren Schichten zugegeben werden. Die Teilchengröße beträgt dabei 2 bis 20 $\mu$m. Die Schichtstoffe können z.B. für dekorative Zwecke mit Aluminium metallisiert oder für Magnetbänder verwendet werden. Mit der Lehre dieser Schrift können zwar die Verarbeitungseigenschaften der Folie verbessert werden, eine Lehre zur Verbesserung des Glanzes und der Wickelbarkeit der Folie vermittelt die Schrift jedoch nicht.

Die EP-B-0 061 769 beschreibt ein magnetisches Aufzeichnungsmedium, das aus einer biaxial orientierten Polyesterfolie und einer dünnen magnetischen metallischen Schicht auf der Oberfläche A der Polyesterfolie zusammengesetzt ist. Gegebenenfalls ist auf der anderen Oberfläche B der Polyesterfolie noch eine Schmiermittelschicht vorhanden. Die Folie ist dadurch gekennzeichnet, dass die beschichtete Oberfläche A

a) eine mittlere Rauigkeit $R_a$ (Gipfel-Tal-Wert) von nicht mehr als 5 nm (60 nm) hat,
b) die Zahl der Vorsprünge mit einer Höhe von 0,27 bis 0,54 $\mu$m 0 bis 0,2/mm² ist und
c) frei ist von Vorsprüngen mit einer Höhe von größer als 0,54 $\mu$m.

Nachteilig an der Folie ist, dass die Oberfläche A zum Verblocken neigt, so dass eine gute Verarbeitung der Folie nicht gegeben ist. Eine Lehre zur Verbesserung des Glanzes, der Trübung und der Wickelbarkeit der Folie wird in der Schrift nicht aufgezeigt.

Die EP-B-0 088 635 beschreibt eine koextrudierte biaxial orientierte Polyesterfolie mit wenigstens zwei Schichten, von denen eine Schicht A aus thermoplastischem Harz besteht, und einer Schicht B, die thermoplastisches Harz und feine Teilchen enthält. Die Folie ist dadurch gekennzeichnet, dass die Oberflächenrauigkeit $R_a$ der äußeren Oberfläche der Schicht A kleiner als 5 nm ist und die äußere Oberfläche der Schicht B entweder

i) eine Oberfläche mit einer Oberflächenrauigkeit $R_a$ von 5 bis 40 nm ist und eine Vielzahl von Vertiefungen und eine Vielzahl von Vorsprüngen aufweist, die in einer bestimmten Anordnung angeordnet sind oder
ii eine Oberfläche ist, die auf einer ebenen Fläche gebildete Vorsprünge aufweist und deren Oberfläche mit einer Schicht C bedeckt ist, die aus einem Schmiermittel besteht und eine Oberflächenrauigkeit $R_a$ von 5 bis 40 nm aufweist.

Nachteilig an der Folieoberfläche A ist, dass sie gegen sich selbst und gegenüber bestimmten anderen Oberflächen (z.B. Gummiwalzen) blockt. Die Folie lässt sich nicht wirtschaftlich verarbeiten, insbesondere beim Metallisieren im Vakuum neigt die Folie infolge der hohen Blockneigung zu Abrissen, was mit großem wirtschaftlichen Schaden verbunden sein kann. Die Folie ist im Sinne der zu lösenden Aufgabe nicht geeignet. Außerdem ist die Trübung der Folie verbesserungsbedürftig.

Die EP-B-0 502 745 beschreibt eine koextrudierte biaxial orientierte Polyesterfolie mit wenigstens drei Schichten, von denen eine äußere Schicht A

a) anorganische Teilchen mit einer mittleren Primärteilchengröße D im Bereich von 1 bis 100 nm enthält, die der Gleichung D<T<200·D genügt, worin T die Dicke der Schicht A ist,
b) Teilchen B mit einer mittleren Primärteilchengröße D1 im Bereich von 0,3 bis 2 μm enthält und einer Primärteilchen-Größenverteilung mit einer relativen Standardardabweichung von höchstens 0,6 und
c) wobei die mittlere Primärteilchengröße D der Teilchen A geringer ist als die mittlere Primärteilchengröße D1 der Teilchen B ist.

Durch Anwendung der Lehre dieser Schrift wird insbesondere das Verarbeitungsverhalten der Folie verbessert. Eine Lehre zur Verbesserung des Glanzes, der Trübung und der Wickelbarkeit der Folie wird in der Schrift nicht aufgezeigt.

In der JP 11-322970 ist eine Polyesterfolie beschrieben, die in der Deckschicht ein Partikelsystem mit einem mittleren Durchmesser $d_{50}$ von 0.1 bis 3.0 μm und einem $d_{25}/d_{75}$-Verhältnis von 1.0 bis 2.0 enthält.

Aufgabe der vorliegenden Erfindung war es nun, eine koextrudierte, biaxial orientierte Polyesterfolie zur Verfügung zu stellen, die sich durch sehr gute optische Eigenschaften auszeichnet und insbesondere einen sehr hohen Glanz und eine sehr niedrige Trübung aufweist. Weiterhin soll die Folie sehr gut wickelbar sein, insbesondere dann, wenn die Maschinenrolle zu breiten Kundenrollen mit großer Lauflänge verarbeitet wird. Außerdem soll sich die Folie durch eine sehr gute Herstellbarkeit und Verarbeitbarkeit auszeichnen und nach der Metallisierung oder nach der Beschichtung mit oxydischen Materialien eine gute Sauerstoffbarriere aufweisen. Zusammengefasst bestand die Aufgabe darin, eine Folie mit folgender Merkmalkombination zur Verfügung zu stellen:

- hoher Glanz
- geringe Trübung
- gute Wickelung
- geringe Sauerstoffpermeation der Folie nach Metallisierung oder nach Beschichtung mit oxydischen Materialien
- geringe Reibungskoeffizienten.

Der Glanz der Folie soll größer als 170 und die Trübung niedriger als 2,5 % sein. Die Folie soll sehr gut wickelbar sein, was insbesondere heißt, dass die aus einer Maschinenrolle hergestellten Kundenrollen so gut wie keine Längsrillen aufweisen. Dies insbesondere dann, wenn es sich um breite Kundenrollen mit großer Lauflänge handelt. Durch die metallisierte Folie sollen weniger als 1,0 cm³ Sauerstoff pro Quadratmeter und pro Tag diffundieren, wenn Luft mit einem Druck von 1 bar darauf lastet. Die Folie soll den bekannten Verpackungsfolien dieser Art in den übrigen Eigenschaften mindestens gleichwertig sein. Sie soll sich zudem einfach und preiswert herstellen lassen, sowie auf den herkömmlichen Maschinen sehr gut verarbeiten lassen. Der Reibungskoeffizient auf beiden Oberflächen soll kleiner als 0,6 sein.

Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einer mehrschichtigen, transparenten, biaxial orientierten Polyesterfolie mit einer Gesamtdicke von 3 bis 30 μm aus mindestens einer Basisschicht (B), die mindestens 80 Gew.-% thermoplastischen Polyester enthält, und mindestens einer auf dieser Basisschicht (B) aufgebrachten transparenten, hochglänzenden Deckschicht (A), wobei die transparente Deckschicht (A) zusätzlich ein Pigmentsystem in einer Menge im Bereich von 0,05 bis 0,5 Gew.-% enthält, bezogen auf das Gesamtgewicht der Deckschicht (A), das die folgenden Merkmale aufweist:

a) der mittlere Korndurchmesser ($d_{50}$-Wert) liegt im Bereich von 1,5 bis 5 μm und
b) die Streuung der Verteilung der Korngröße, ausgedrückt durch den SPAN 98, ist kleiner/gleich 1,9.

Die Unteransprüche geben bevorzugte Ausführungsformen der Erfindung an, die nachstehend näher erläutert werden.

Erfindungsgemäß ist die Folie zumindest zweischichtig und umfasst dann als Schichten die Basisschicht (B) und die glänzende Deckschicht (A).

Die Basisschicht (B) der Folie enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4' dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Basisschicht aus Polyethylenterphthalat-Homopolymer. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -C$(CH_3)_2$-, -C$(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicärbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Deckschicht (A) oder weitere Deckschichten können prinzipiell die gleichen Polymeren verwendet werden, wie für die Basisschicht (B). Daneben können in den Deckschichten aber auch andere Materialien enthalten sein, wobei dann die Deckschichten bevorzugt aus einem Gemisch von Polymeren, einem Copolymeren oder einem Homopolymeren besteht, welches Ethylen-isophthalat-Einheiten und/oder Ethylen-2,6-naphthalat-Einheiten und/oder Ethylen-terephthalat-Einheiten enthalten.
Bis zu 10 Mol-% der Polymere können aus weitere Comonomeren bestehen.

Zur Erzielung des gewünschten hohen Glanzes enthält die Deckschicht (A) zumindest das erfindungsgemäße Pigmentsystem in einer wirksamen Menge im Bereich von 0,05 bis 0,5 Gew.- %, bezogen auf das Gewicht der Deckschicht (A). In der bevorzugten Ausführungsform der Folie gemäß der vorliegenden Erfindung liegt die Pigmentkonzentration im Bereich von 0,055 bis 0,45 Gew.-%, besonders bevorzugt von 0,06 bis 0,4 Gew.-%.

Typische Pigmentsysteme sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Daneben können auch Mischungen von zwei und mehreren verschiedenen Pigmentsystemen oder Mischungen von Pigmentsystemen in gleicher Zusammensetzung, aber unterschiedlicher Partikelgröße gewählt werden. Die Partikeln können den Polymeren der einzelnen Schichten der Folie in den jeweils vorteilhaften Konzentrationen, z. B. als glykolische Dispersion während der Polykondensation oder über Masterbatche bei der Extrusion, zugegeben werden.

Die Deckschicht (A) wird zur Erzielung des gewünschten hohen Glanzes und der hohen Transparenz vergleichsweise wenig mit inerten Partikeln gefüllt. Die Konzentration der inerten Partikeln in der Deckschicht (A) liegt in der bevorzugten Ausführungsform zwischen 0,055 und 0,45 Gew.-%, in der besonders bevorzugten Ausführungsform zwischen 0,06 und 0,4 Gew.-%, und richtet sich im Wesentlichen nach den zu erzielenden optischen Eigenschaften und den Laufeigenschaften der Folie.

Ist die Konzentration der Partikeln größer als das vorgeschriebene Maß, so werden die gewünschten optischen Eigenschaften (hohe Transparenz und hoher Glanz) nicht mehr erreicht. Die Folie wird trüb und die Oberfläche stumpf (matt). Ist andererseits die Konzentration der Partikel kleiner als das vorgeschriebene Maß, dann geht dies zu Lasten der Laufeigenschaften bzw. der Verarbeitungseigenschaften der Folie. Die Oberfläche der Folie neigt zum Verblocken, wodurch eine gute Verarbeitbarkeit, insbesondere auf schnelllaufenden Maschinen, nicht mehr gewährleistet ist.

Bevorzugte Partikeln sind $SiO_2$ in kolloidaler und in kettenartiger Form. Diese Partikeln werden sehr gut in die Polymermatrix eingebunden.

Es wurde gefunden, dass der Korndurchmesser und die Streuung (Streubreite) des Durchmessers des verwendeten Pigmentsystems den Glanz, die Trübung und insbesondere die Wickelbarkeit der Folie beeinflussen. Es wurde gefunden, dass eine geringere Streuung des mittleren Durchmessers eine gleichmäßigere Luftschichtdicke zwischen den Folienlagen bewirkt und damit eine geringere Tendenz zum Blocken der Folienlagen gegeneinander bzw. eine bessere Wickelbarkeit bewirkt.

Zur Erzielung einer möglichst niedrigen Trübung, eines möglichst hohen Glanzes und zur Erzielung einer guten Wickelbarkeit enthält die Deckschicht (A) der Folie gemäß der vorliegenden Erfindung ein Pigmentsystem, bei dem der mittlere Durchmesser (der $d_{50}$-Wert) im Bereich von 1,5 bis 5,0 $\mu$m liegt und die Streuung (ausgedrückt durch den SPAN 98) kleiner als 1,9 ist.

In der bevorzugten Ausführungsform enthält die Deckschicht (A) der Folie gemäß der vorliegenden Erfindung ein Pigmentsystem, bei dem der mittlere Durchmesser im Bereich von 1,6 bis 4,9 $\mu$m liegt und die Streuung kleiner als 1,8 ist. In der besonders bevorzugten Ausführungsform enthält die Deckschicht (A) der Folie gemäß der vorliegenden Erfindung ein Pigmentsystem, bei dem der mittlere Durchmesser im Bereich von 1,7 bis 4,8 $\mu$m liegt und die Streuung kleiner als 1,7 ist.

Enthält die Deckschicht (A) der Folie dagegen ein Pigmentsystem, bei dem der mittlere Durchmesser und die Streuung außerhalb des erfindungsgemäßen Bereiches liegen, so wirkt sich dies insbesondere negativ auf die Wickelbarkeit der Folie aus. Auch kann hierdurch ebenfalls die Transparenz und der Glanz der Folie negativ beeinflusst werden.

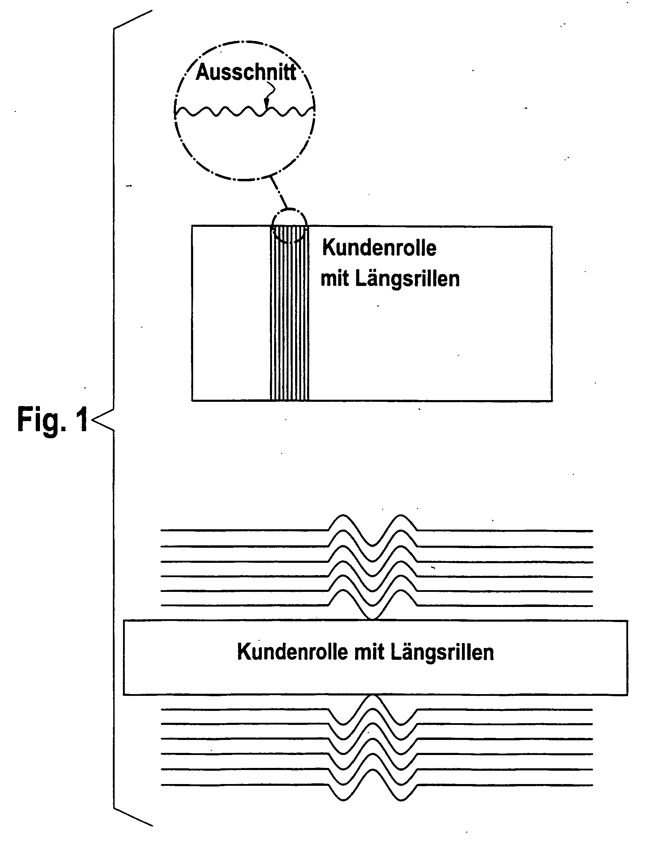

Enthält die Deckschicht (A) der Folie ein Pigmentsystem, bei dem der mittlere Durchmesser größer als 5,0 $\mu$m und die Streuung größer als 1,9 sind, so wird insbesondere die Wickelbarkeit der Folie negativ beeinflusst. Es tritt bei diesen Folien eine verstärkte Neigung zum Verblocken der Folienlagen gegeneinander auf. Die aus der Maschinenrolle hergestellten Kundenrollen neigen eher zur Bildung von Längsrillen, wie sie in **Figur 1** dargestellt sind, in der eine (oder mehrere) über den Umfang der Rolle deutlich sichtbare Rille(n) sichtbar werden, die sich im Vergleich zur Umgebung leicht eindrücken lässt(lassen). Diese Rillen schränken die Verarbeitbarkeit und die Verwendung der Folie deutlich ein. Die in die Folien (teilweise irreversibel) eingeprägten Längsrillen werden nämlich bei/nach der Weiterverarbeitung (z.B. Metallisierung, Bedruckung, Prägefolienanwendung) im Produkt sichtbar und beeinträchtigen als optisch/mechanischer Defekt die Verwendbarkeit der Folie. Insbesondere breite Rollen (über 1,5 m) und Rollen, die eine große Lauflänge aufweisen (größer 24 000 m), neigen stark zur Ausbildung von solchen Längsrillen. Weiterhin hat sich herausgestellt, dass Folien mit dem vorgenannten, im Sinne der Erfindung ungünstigen Pigmentsystem, verstärkt zum Verlust an Transparenz und zu einem verringerten Glanz neigen.

Enthält die Deckschicht (A) der Folie dagegen ein Pigmentsystem, bei dem der mittlere Durchmesser kleiner als 1,5 $\mu$m und die Streuung größer als 1,9 sind, so kann sich dies ebenfalls in einer verschlechterten Wickelung und in verschlechterten optischen Eigenschaften bemerkbar machen. Durch die Vielzahl an kleinen Pigmenten (breite Verteilung des Pigmentsystems und kleiner Partikeldurchmesser) werden in der Folie eine Vielzahl von Streuzentren gebildet, die nicht nur die Transparenz sondern auch den Glanz der Folie verringern. Weiterhin wird auch in diesem Fall die Wickelbarkeit der Rolle verschlechtert und zwar in dem Maße, wie zuvor beschrieben. Zudem ist bei diesen Folien die Neigung zum Teleskopieren bzw. Verlaufen der Rollen sehr stark ausgeprägt.

Die glänzend scheinende Deckschicht (A) wird in einer günstigen Ausführungsform durch die folgenden weiteren Parameter beschrieben

a) die Rauigkeit der Folie, ausgedrückt durch ihren $R_a$-Wert, liegt im Bereich von 30 bis 150 nm, bevorzugt 35 bis 140 nm, besonders bevorzugt 40 bis 130 nm. Kleinere Rauigkeitswerte als 30 nm wirken sich bei dem beanspruchten Pigmentsystem negativ auf die Laufeigenschaften aus, und größere Werte als 130 nm beeinträchtigen die optischen Eigenschaften der Folie.

b) Der Messwert der Oberflächengasströmung liegt im Bereich von 4 bis 200 s, bevorzugt im Bereich von 5 bis 180 s. Bei Werten oberhalb von 200 wird die Wickelbarkeit der Folie negativ beeinflusst.

Die Basisschicht (B) kann ebenfalls zusätzlich übliche Additive, wie beispielsweise Stabilisatoren und/oder Pigmente (=Füller) enthalten. Als Stabilisatoren werden vorteilhaft beispielsweise Phosphorverbindungen, wie Phosphorsäure oder Phosphorsäureester, eingesetzt.

Typische Pigmente (Füller) für die Basisschicht (B) sind wie für die Deckschicht(en) angegebene anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

In einer besonders vorteilhaften Ausführungsform enthält die Basisschicht (B) nur die über das Regenerat eingebrachten Pigmente. Hierdurch wird eine Folie mit besonders niedriger Trübung hergestellt.

In einer vorteilhaften Verwendungsform besteht die Folie aus drei Schichten, der Basisschicht (B) und beidseitig auf dieser Basisschicht aufgebrachten Deckschichten (A) und (C), wobei die Deckschicht (A) hochglänzend ist und die erfindungsgemäße Menge an Pigmentsystem enthält. In einer besonders vorteilhaften Verwendungsform ist die dreischichtige Folie symmetrisch aufgebaut und besteht aus der Basisschicht (B) und beidseitig auf dieser Basisschicht (B) aufgebrachten Deckschichten (A) und (C), wobei die Deckschichten (A) und (C) hochglänzend sind und das erfindungsgemäße Pigmentsystem enthalten.

Zwischen der Basisschicht (B) und den Deckschichten kann sich gegebenenfalls noch eine Zwischenschicht befinden. Diese kann wiederum aus den für die Basisschicht (B) beschriebenen Polymeren bestehen. In einer besonders bevorzugten Ausführungsform besteht die Zwischenschicht aus dem für die Basisschicht (B) verwendeten Polyester. Die Zwischenschicht kann auch die beschriebenen üblichen Additive enthalten. Die Dicke der Zwischenschicht ist im allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Bei der besonders vorteilhaften dreischichtigen Ausführungsform der erfindungsgemäßen Folie liegt die Dicke der Deckschichten (A) und (C) im allgemeinen im Bereich von 0,1 bis 5,0 $\mu$m, bevorzugt im Bereich von 0,2 bis 4,5 $\mu$m, besonders bevorzugt im Bereich von 0,3 bis 4,0 $\mu$m, wobei die Deckschichten (A) und (C) gleich oder verschieden dick sein können.

Die Gesamtdicke der erfindungsgemäßen Polyesterfolie kann innerhalb bestimmter Grenzen variieren. Sie beträgt 3 bis 80 $\mu$m, insbesondere 4 bis 50 $\mu$m, vorzugsweise 5 bis 30 $\mu$m, wobei die Basisschicht (B) einen Anteil von vorzugsweise 5 bis 97 % an der Gesamtdicke hat.

Die Polymeren für die Basisschicht (B) und die beiden Deckschichten (A) und (C) werden zur Herstellung der Folie drei Extrudern zugeführt. Etwa vorhandene Fremdkörper oder Verunreinigungen lassen sich aus der Polymerschmelze vor der Extrusion durch geeignete Filter entfernen. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Erfindung betrifft auch ein Verfahren zur Herstellung der erfindungsgemäßen Polyesterfolie nach dem aus der Literatur bekannten Koextrusionsverfahren.

Im Rahmen dieses Verfahrens wird so vorgegangen, dass die den einzelnen Schichten (A), (B) und ggf. (C) der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt und dann aufgewickelt wird.

Die biaxiale Streckung (Orientierung) wird im allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst wird, wie beim Koextrusionsverfahren üblich, das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Nach dem Längsstrecken und vor der Querstreckung kann man eine oder beide Oberfläche(n) der Folie nach den bekannten Verfahren in-line beschichten. Die in-Line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Für die Herstellung einer Folie mit einer guten Sauerstoffbarriere (nach entsprechender Metallisierung oder nach Beschichtung mit keramischen Substanzen), einer verbesserten Wickelung und einer verbesserten Transparenz hat es sich als günstig erwiesen, wenn die planare Orientierung $\Delta p$ der Folie größer ist als $\Delta p = 0,165$, bevorzugt größer ist als $\Delta p = 0,166$ und ganz bevorzugt größer ist als $\Delta p = 0,167$.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0,163$ mit dem Parametersatz $\lambda_{MD} = 3,7$ und $\lambda_{TD} = 3,8$ , die Strecktemperaturen in Längs- und in Querrichtung $T_{MD}= 80$ bis $123$ °C und $T_{TD} = 80$ bis $126$ °C, so erhält man durch Erniedrigung der Längsstrecktemperatur auf $T_{MD} = 80$ bis $118$ °C oder durch Erniedrigung der Querstrecktemperatur auf $T_{TD} = 80$ bis $122$ °C oder durch Erhöhung des Längsstreckverhältnisses auf $\lambda_{MD} = 4,5$ oder durch Erhöhung des Querstreckverhältnisses auf $\lambda_{TD}= 4,0$ eine planare Orientierung $\Delta p$, die im gewünschten Bereich liegt. Die Folienbahngeschwindigkeit betrug hierbei 370 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter geringfügig verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird im allgemeinen so eingestellt, dass die resultierende Oberflächenspannung der Folie im Bereich von über 45 mN/m liegt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen vor dem Streckschritt in Querrichtung auf die Folie aufzubringen.

Die erfindungsgemäße Folie zeichnet sich durch hervorragende optische Eigenschaften aus, d.h. durch einen hohen Glanz und eine hohe Transparenz, durch ein sehr gutes Wickelverhalten und durch ein sehr gutes Verarbeitungsverhalten.

Daneben ist bei der Herstellung der Folie gewährleistet, dass das Verschnittmaterial (Regenerat), das bei der Folienherstellung im Betrieb anfällt, in einer Menge im Bereich von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere ihr optisches Erscheinungsbild.

Die Folie eignet sich demnach ganz hervorragend für den Einsatz in der flexiblen Verpackung und zwar insbesondere dort, wo ihre hervorragende Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

Tabelle 1

|  | erfindungsgemäßer Bereich | bevorzugt | besonders bevorzugt | Einheit | Messmethode |
|---|---|---|---|---|---|
| Glanz, 20° | > 170 | > 175 | > 180 |  | DIN 67530 |
| COF (Reibung) | < 0,6 | < 0,55 | < 0,50 |  | DIN 53375 |
| Mittlere Rauhigkeit $R_a$ | 30 bis 150 | 35 bis 140 | 40 bis 130 | nm | DIN 4768, Cut-off von 0,25 mm |

(fortgesetzt)

| | erfindungsgemäßer Bereich | bevorzugt | besonders bevorzugt | Einheit | Messmethode |
|---|---|---|---|---|---|
| Messwertbereich für die Ofl-Gasströmung | 4 bis 200 | 5 bis 180 | 6 bis 160 | sec | intern |
| weitere Folieneigenschaften | | | | | |
| Trübung | < 2,5 | < 2,3 | < 2,1 | % | ASTM-D 1003-52 |
| Planare Orientierung Δp (optional) | > 0,165 | > 0,166 | ≥ 0,167 | | intern |
| Sauerstoffpermeation nach Metallisierung von Schicht A | < 1,0 | < 0,95 | < 0,9 | $cm^3/(m^2 \cdot d \cdot bar)$ | DIN 53380 |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6{,}907 \cdot 10^{-4}\ SV\ (DCE) + 0{,}063096$$

Reibung (COF)

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der so genannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinander liegenden Folienlagen gemessen und anstelle einer 4°-Lochblende eine 1 °-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss zusammen mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezipienten einen Druckanstieg von 56 mbar zu bewirken. Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung $\Delta p$**

Die Bestimmung der planaren Orientierung erfolgt über die Messung der Brechungsindizes mit dem Abbe-Refraktometer nach der internen Betriebsvorschrift 24.

| | |
|---|---|
| Probenvorbereitung: | |
| Probengröße und Probenlänge: | 60 bis 100 mm |
| Probenbreite: | entspricht Prismenbreite von 10 mm |

Zur Bestimmung von $n_{MD}$ und $n_a$ (=$n_z$) muss die zu messende Probe aus der Folie ausgeschnitten werden, bei der die Laufkannte der Probe exakt mit der TD-Richtung übereinstimmen muss. Zur Bestimmung von $\eta_{TD}$ und $n_a$ (=$n_z$) muss die zu messende Probe aus der Folie ausgeschnitten werden, bei der die Laufkannte der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,70 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $\eta_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

## Messung des mittleren Korndurchmessers $d_{50}$

Die Bestimmung des mittleren Korndurchmessers $d_{50}$ wurde mittels Laser auf einem Malvem MasterSizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang läuft automatisch ab und beinhaltet auch die mathematische Bestimmung des $d_{50}$ Wertes.

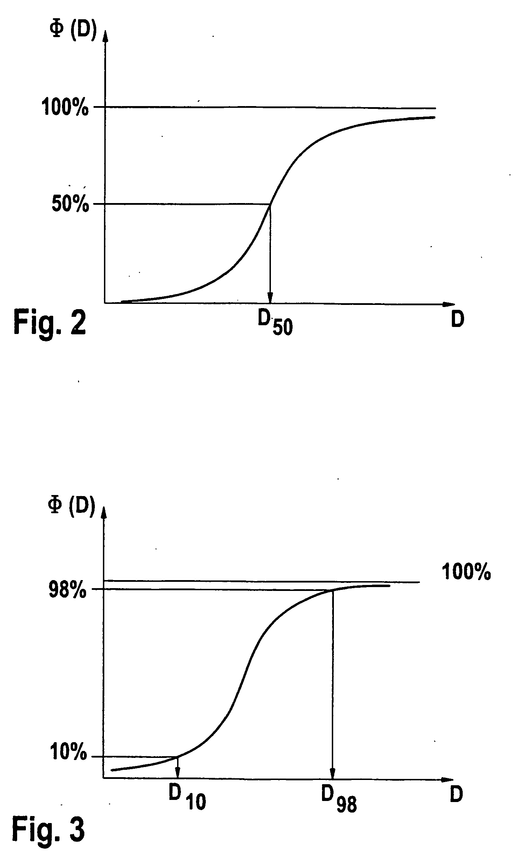

Der $d_{50}$ Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert, wie die in **Figur 2** näher verdeutlicht ist.

## Messung der SPAN 98

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN\,98 = \frac{d_{98} - d_{10}}{d_{50}}$$

Für die Ermittlung von $d_{98}$ und $d_{10}$ wird wiederum die (relative) Summenkurve der Partikelgrößenverteilung benutzt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes mit der Summenkurve liefert auf der Abszissenachse sofort den gewünschten $d_{10}$-Wert, wie dies in Figur3 näher verdeutlicht ist.

## Beispiel 1

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt.

Daneben wurden Chips aus einem Polyethylenterephthalat (hergestellt über das Umesterungsverfahren mit Mn als Umesterungskatalysator, Mn-Konzentration: 100 ppm) bei einer Temperatur von 150 °C auf eine Restfeuchte von unterhalb 100 ppm getrocknet und mit dem erfindungsgemäßen Füllstoff den Extrudern für die Deckschichten (A) und (C) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 $\mu$m hergestellt. Die Dicke der jeweiligen Deckschichten ist der Tabelle 2 zu entnehmen.

Deckschicht (A), Mischung aus:

90 Gew.-%    Polyethylenterephthalat mit einem SV-Wert von 800

10 Gew.-%    Masterbatch aus 99 Gew.-% Polyethylenterephthalat und 1,0 Gew.-% Kieselsäurepartikel (®Sylysia 320 von der Fa. Fuji/Japan) mit einem $d_{50}$-Wert von 2,5 $\mu$m und einer SPAN 98 von 1,4.

Basisschicht (B):

100,0 Gew.-%        Polyethylenterephthalat mit einem SV-Wert von 800

Deckschicht (C), Mischung aus:

90 Gew.-%        Polyethylenterephthalat mit einem SV-Wert von 800

10 Gew.-%        Masterbatch aus 99 Gew.-% Polyethylenterephthalat und 1,0 Gew.-% Kieselsäurepartikel (®Sylysia 320 von der Fa. Fuji/Japan) mit einem $d_{50}$-Wert von 2,5 $\mu$m und einer SPAN 98 von 1,4.

Die Herstellungsbedingungen in den einzelnen Verfahrensschritten waren:

| | | | | |
|---|---|---|---|---|
| Extrusion: | Temperaturen | A-Schicht: | 290 | °C |
| | | B-Schicht: | 290 | °C |
| | | C-Schicht: | 290 | °C |
| | Düsenspaltweite: | | 3,5 | mm |
| | Temperatur der Abzugswalze | | 30 | °C |
| Längsstreckung: | Temperatur: | | 80 -126 | °C |
| | Längsstreckverhältnis: | | 4,5 | |
| Querstreckung: | Temperatur: | | 80 -135 | °C |
| | Querstreckverhältnis | | 4,0 | |
| Fixierung: | Temperatur: | | 230 | °C |
| | Dauer: | | 3 | s |

Die Folie hatte den geforderten hohen Glanz und die geforderte niedrige Trübung. Weiterhin zeigt die Folie das gewünschte Wickelverhalten und das gewünschte Verarbeitungsverhalten. Der Folienaufbau und die erzielten Eigenschaften derart hergestellter Folien sind in den Tabellen 2 und 3 dargestellt.

**Beispiel 2**

Im Vergleich zu Beispiel 1 wurde die Deckschichtdicke der glänzenden Deckschichten (A) und (C) von 1,0 auf 1,5 $\mu$m bei sonst identischem Folienaufbau und identischer Herstellungsweise angehoben. Das Wickelverhalten der Folie hat sich hierdurch verbessert. Der Glanz der Folie hat sich marginal verringert und die Trübung marginal erhöht.

**Beispiel 3**

Im Vergleich zu Beispiel 1 wurden jetzt die Pigmentkonzentrationen in den Deckschichten (A) und (C) erhöht. Hierdurch haben sich der Glanz der Folie marginal verringert und die Trübung marginal erhöht. Die Wickelbarkeit wurde jedoch dagegen nochmals verbessert.

**Beispiel 4**

Im Vergleich zu Beispiel 3 wurde die Deckschichtdicke der glänzenden Deckschichten (A) und (C) von 1,0 auf 1,5 $\mu$m bei sonst identischem Folienaufbau und identischer Herstellungsweise angehoben. Das Wickelverhalten der Folie hat sich hierdurch nochmals tendentiell verbessert, während sich der Glanz wesentlich verringert und die Trübung wesentlich erhöht haben.

**Beispiel 5**

Im Vergleich zu Beispiel 2 wurden jetzt der Korndurchmesser bei gleichen SPAN-Werten in den Deckschichten (A) und (C) erhöht. Hierdurch haben sich der Glanz der Folie marginal verringert und die Trübung marginal erhöht. Die Wickelbarkeit konnte dagegen nochmals verbessert werden.

**Beispiel 6**

Im Vergleich zu Beispiel 2 wurde den glänzenden Deckschichten (A) und (C) ein weiteres Pigmentsystem zugegeben. Außer den zuvor genannten Pigmenten enthalten jetzt die beiden Deckschichten noch 500 ppm ®Aerosil TT 6000 (von der Fa. Degussa), wobei es sich um ein pyrogenes Silica handelt.

**Beispiel 7**

Im Vergleich zu Beispiel 6 wurde jetzt in den glänzenden Deckschichten (A) und (C) anstelle des Sylysia 320 das gröbere Pigment Sylysia 430 verwendet.

**Vergleichsbeispiel 1**

Im Vergleich zu Beispiel 1 wurden jetzt die Deckschichten (A) und (C) mit einem Pigmentsystem entsprechend dem Stand der Technik gemäß US-PS 3,154,461 rezepturiert. Die Wickelbarkeit der Folie ist deutlich schlechter geworden und die optischen Eigenschaften haben sich ebenfalls verschlechtert.

EP 1 236 568 B1

Tabelle 2

| Beispiel | Foliendicke µm | Folienaufbau | Schichtdicken µm | | | Pigmente in den Schichten | | | mittlerer Pigment-Durchmesser in Schichten µm | | | Pigment-konzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,0 | 10 | 1,0 | Sylysia 320 | kein | Sylysia 320 | 2,5 | | 2,5 | 1000 | 0 | 1000 |
| B 2 | 12 | ABC | 1,5 | 9 | 1,5 | Sylysia 320 | kein | Sylysia 320 | 2,5 | | 2,5 | 1000 | 0 | 1000 |
| B 3 | 12 | ABC | 1,0 | 10 | 1,0 | Sylysia 320 | kein | Sylysia 320 | 2,5 | | 2,5 | 1800 | 0 | 1800 |
| B 4 | 12 | ABC | 1,5 | 9 | 1,5 | Sylysia 320 | kein | Sylysia 320 | 2,5 | | 2,5 | 1800 | 0 | 1800 |
| B 5 | 12 | ABC | 1,5 | 9 | 1,5 | Sylysia 430 | kein | Sylysia 430 | 3,4 | | 3,4 | 1000 | 0 | 1000 |
| B 6 | 12 | ABC | 1,5 | 9 | 1,5 | Sylysia 320 Aerosil TT 600 | kein | Sylysia 320 Aerosil TT 600 | 2,5 0,05 | | 2,5 0,05 | 1000 500 | 0 | 1000 500 |
| B 7 | 12 | ABC | 1,5 | 9 | 1,5 | Sylysia 430 Aerosil TT 600 | kein | Sylysia 430 Aerosil TT 600 | 3,4 0,05 | | 3,4 0,05 | 1000 500 | 0 | 1000 500 |
| VB 1 | 12 | ABC | 1,5 | 9 | 1,5 | $d_{50}$ = 5,5, SPAN 98=2,2 | kein | $d_{50}$ = 5,5, SPAN 98=2,2 | 5,0 | | 2,5 0,04 | 1000 | 0 | 1000 |

Tabelle 3

| Beispiel | Reibung COF A-Seite gegen C-Seite | Mittlere Rauigkeit $R_a$ | | Messwerte für die Gasströmung | | $\Delta p$ | Glanz A-Seite | Glanz C-Seite | Trübung | Wickelverhalten und Handling A-Seite | Verarbeitungs-verhalten C-Seite |
|---|---|---|---|---|---|---|---|---|---|---|---|
| | | A-Seite | C-Seite | A-Seite | C-Seite | | | | | | |
| B1 | 0,46 | 55 | 55 | 85 | 85 | 0,167 | 200 | 200 | 1,6 | + | + |
| B2 | 0,45 | 60 | 60 | 82 | 82 | 0,167 | 198 | 197 | 1,65 | +(+) | +(+) |
| B3 | 0,43 | 63 | 62 | 79 | 78 | 0,167 | 192 | 192 | 1,8 | ++(+) | ++(+) |
| B4 | 0,43 | 64 | 63 | 78 | 76 | 0,167 | 190 | 189 | 1,8 | +++ | +++ |
| B5 | 0,42 | 85 | 83 | 25 | 26 | 0,167 | 194 | 194 | 1,5 | +++ | +++ |
| B6 | 0,40 | 62 | 62 | 80 | 80 | 0,167 | 192 | 192 | 1,8 | ++(+) | ++(+) |
| B7 | 0,41 | 85 | 84 | 25 | 26 | 0,167 | 191 | 193 | 1,7 | ++++ | ++++ |
| VB 1 | 0,48 | 55 | 50 | 90 | 90 | 0,167 | 190 | 190 | 1,75 | - | - |

Zeichenerklärung beim Wickelverhalten und beim Verarbeitungsverhalten der Folien:

++++: keine Klebeneigung an Walzen oder anderen mechanischen Teilen, keine Blockprobleme und keine Längsrillen beim Wickeln, sehr gutes Verarbeitungsverhalten

+++: keine Klebeneigung an Walzen oder anderen mechanischen Teilen, keine Blockprobleme und keine Längsrillen beim Wickeln, gutes Verarbeitungsverhalten

++: keine Klebeneigung an Walzen oder anderen mechanischen Teilen, keine Blockprobleme und keine Längsrillen beim Wickeln, zufriedenstellendes Verarbeitungsverhalten

+: keine Klebeneigung an Walzen oder anderen mechanischen Teilen, keine Blockprobleme und höchstens eine schmale, nicht irreversibel verprägte Längsrille beim Wickeln, genügendes Verarbeitungsverhalten

-: Klebeneigung an Walzen oder anderen mechanischen Teilen, Blockprobleme und Längsrillen beim Wickeln und keine gute Verarbeitung auf Verpackungsmaschinen

**Patentansprüche**

1. Mehrschichtige, transparente, biaxial orientierte Polyesterfolie mit einer Gesamtdicke von 3 bis 30 $\mu$m aus mindestens einer Basisschicht (B), die mindestens 80 Gew.-% thermoplastischen Polyester enthält, und mindestens einer auf dieser Basisschicht (B) aufgebrachten transparenten, hochglänzenden Deckschicht (A), wobei die transparente Deckschicht (A) zusätzlich ein Pigmentsystem in einer Menge im Bereich von 0,05 bis 0,5 Gew.-% enthält, bezogen auf das Gesamtgewicht der Deckschicht (A), **dadurch gekennzeichnet, dass** das Pigmentsystem die folgenden Merkmale aufweist:

   a) der mittlere Korndurchmesser ($d_{50}$-Wert) liegt im Bereich von 1,5 bis 5 $\mu$m und
   b) die Streuung der Verteilung der Korngröße, ausgedrückt durch den SPAN 98, ist kleiner/gleich 1,9.

2. Mehrschichtige, transparente Polyesterfolie nach Anspruch 1, **dadurch gekennzeichnet, dass** die transparente Deckschicht (A) ein Pigmentsystem enthält, das einen mittleren Korndurchmesser ($d_{50}$-Wert) im Bereich von 1,6 bis 4,9, bevorzugt im Bereich von 1,7 bis 4,8 $\mu$m, aufweist.

3. Mehrschichtige, transparente Polyesterfolie nach Anspruch 1 oder 2, **dadurch gekennzeichnet, dass** die transparente Deckschicht (A) ein Pigmentsystem enthält, das einen SPAN 98 von kleiner/gleich 1,8, bevorzugt von kleiner/gleich 1,7, aufweist.

4. Mehrschichtige, transparente Polyesterfolie nach einem der Ansprüche 1 bis 3,
   **dadurch gekennzeichnet, dass** sie einen dreischichtigen Aufbau mit einer Basisschicht (B) und beidseitig auf der Basisschicht (B) angeordneten Deckschichten (A) und (C) besitzt, dass sie eine Gesamtdicke im Bereich von 5 bis 30 $\mu$m besitzt, dass die Dicke der Deckschichten (A) und (C) im Bereich von 0,1 bis 5 $\mu$m liegt und dass Deckschichten (A) und (C) gleich oder verschieden dick sein können.

5. Mehrschichtige, transparente Polyesterfolie nach einem der Ansprüche 1 bis 4,
   **dadurch gekennzeichnet, dass** ihr Glanz größer/gleich 170 und ihre Trübung kleiner/gleich 2,5 % ist.

6. Mehrschichtige, transparente Polyesterfolie nach einem der Ansprüche 1 bis 5,
   **dadurch gekennzeichnet, dass** ihre Rauigkeit, ausgedrückt als ihr $R_a$-Wert, im Bereich von 30 bis 150 nm liegt, bevorzugt von 35 bis 140 nm, besonders bevorzugt von 40 bis 130 nm, und dass ihr Messwert der Oberflächengasströmung im Bereich von 4 bis 200 s liegt, bevorzugt von 5 bis 180 s.

7. Mehrschichtige, transparente Polyesterfolie nach einem der Ansprüche 1 bis 6,
   **dadurch gekennzeichnet, dass** die planare Orientierung $\Delta$p der Folie größer/gleich 0,165 ist, bevorzugt größer/gleich 0,166, ganz bevorzugt größer/gleich 0,167.

8. Verfahren zum Herstellen einer mehrschichtigen, transparenten Polyesterfolie nach einem der Ansprüche 1 bis 7 nach dem Coextrusionsverfahren, bei dem zunächst die Polyester der jeweiligen Schichten in Extrudern komprimiert, verflüssigt und dabei homogenisiert wird, wobei die gegebenenfalls als Zusätze vorgesehenen Additive bereits im jeweiligen Polymer enthalten sein können, und bei dem die Schmelzen dann durch eine mehrschichtige Flachdüse gepresst, und die ausgepresste mehrschichtige Schmelze auf einer oder mehreren Abzugswalzen abgezogen und zu einer Vorfolie verfestigt, die verfestigte Vorfolie anschließend biaxial gestreckt, die biaxial gestreckte Folie thermofixiert und gegebenenfalls an der zur Behandlung vorgesehenen Oberfläche noch corona- oder flammbehandelt wird, **dadurch gekennzeichnet, dass** die Temperatur bei der Längsstreckung im Bereich von 80 bis 130 °C und bei der Querstreckung im Bereich von 90 bis 150 °C eingestellt wird und dass das Längsstreckverhältnis im Bereich von 2,5:1 bis 6:1, bevorzugt von 3:1 bis 5,5:1, und das Querstreckverhältnis im Bereich von 3,0:1 bis 5,0:1, bevorzugt von 3,5:1 bis 4,5:1, liegt.

9. Verfahren nach Anspruch 8, **dadurch gekennzeichnet, dass** die Folie nach dem Strecken über eine Zeitdauer im Bereich von 0,1 bis 10 s bei einer Temperatur von 150 bis 250 °C gehalten und dabei thermofixiert wird.

10. Verfahren nach Anspruch 8 oder 9, **dadurch gekennzeichnet, dass** zusätzlich eine oder beide Oberfläche/n der Folie corona- oder flammbehandelt wird/werden, wobei die Behandlungsintensität so eingestellt wird, dass sich eine Oberflächenspannung der Folie im Bereich von größer/gleich 45 mN/m ergibt.

11. Verfahren nach einem der Ansprüche 8 bis 10, **dadurch gekennzeichnet, dass** Verschnittmaterial, das während der Folienherstellung anfällt, als Regenerat in einer Menge im Bereich von 20 bis 60 Gew.-%, bezogen auf das Gesamtgewicht der Folie, wieder der Extrusion zugeführt wird.

12. Verwendung einer mehrschichtigen, transparenten Folie nach einem der Ansprüche 1 bis 7 für den Einsatz in der flexiblen Verpackung, insbesondere auf schnelllaufenden Verpackungsmaschinen, oder im industriellen Sektor, insbesondere für Prägeanwendungen.

**Claims**

1. A multilayer, transparent, biaxially oriented polyester film with total thickness of from 3 to 30 $\mu$m made from at least one base layer (B) which comprises at least 80 % by weight of thermoplastic polyester, and from, applied to this base layer (B), at least one transparent, high-gloss outer layer (A), where the transparent outer layer (A) also comprises an amount in the range from 0.05 to 0.5 % by weight, based on the total weight of the outer layer (A), of a pigment system, wherein the pigment system has the following features:

   a) the median grain diameter ($d_{50}$) is in the range from 1.5 to 5 $\mu$m and
   b) the spread of the distribution of the grain size, expressed by the SPAN 98, is less than or equal to 1.9.

2. The multilayer, transparent polyester film as claimed in claim 1, wherein the transparent outer layer (A) comprises a pigment system which has a median grain diameter ($d_{50}$) in the range from 1.6 to 4.9 $\mu$m, preferably in the range from 1.7 to 4.8 $\mu$m.

3. The multilayer, transparent polyester film as claimed in claim 1 or 2, wherein the transparent outer layer (A) comprises a pigment system which has a SPAN 98 of less than or equal to 1.8, preferably of less than or equal to 1.7.

4. The multilayer, transparent polyester film as claimed in any of claims 1 to 3, which has a three-layer structure with a base layer (B) and, arranged on the two sides of the base layer (B), outer layers (A) and (C), and which has an overall thickness in the range from 5 to 30 $\mu$m, and wherein the thickness of the outer layers (A) and (C) is in the range from 0.1 to 5 $\mu$m, and wherein outer layers (A) and (C) may be of identical or different thickness.

5. The multilayer, transparent polyester film as claimed in any of claims 1 to 4, whose gloss is greater than or equal to 170 and whose haze is less than or equal to 2.5 %.

6. The multilayer, transparent polyester film as claimed in any of claims 1 to 5, whose roughness, expressed as its $R_a$ value, is in the range from 30 to 150 nm, preferably from 35 to 140 nm, particularly preferably from 40 to 130 nm, and whose value measured for surface gas flow is in the range from 4 to 200 s, preferably from 5 to 180 s.

7. The multilayer, transparent polyester film as claimed in any of claims 1 to 6, whose planar orientation $\Delta p$ is greater than or equal to 0.165, preferably greater than or equal to 0.166, very preferably greater than or equal to 0.167.

8. A process for producing a multilayer, transparent polyester film as claimed in any of claims 1 to 7 by coextrusion, by first compressing, plasticizing, and thereby homogenizing the polyesters of the respective layers in extruders, at which juncture any additives used may already be present in the respective polymer, and then by pressing the melts through a flat-film coextrusion die, and drawing off the extruded multilayer film on one or more take-off rolls and solidifying the same to give a prefilm, and then biaxially stretching the solidified prefilm, and heat-setting the biaxially stretched film and, where appropriate, corona- or flame- treating the same on that surface intended for treatment, which comprises using a longitudinal stretching temperature in the range from 80 to 130 °C and using a transverse stretching temperature in the range from 90 to 150 °C, and which comprises using a longitudinal stretching ratio in the range from 2.5:1 to 6:1, preferably from 3:1 to 5.5:1, and using a transverse stretching ratio in the range from 3.0:1 to 5.0:1, preferably from 3.5:1 to 4.5:1.

9. The process as claimed in claim 8, wherein, after stretching, the film is held for a period in the range from 0.1 to 10 s at a temperature of from 150 to 250 °C and thus heat-set.

10. The process as claimed in claim 8 or 9, wherein one or both surfaces of the film is/are also corona- or flame- treated, the intensity of treatment set being such as to give the film a surface tension in the range greater than or equal to 45 mN/m.

11. The process as claimed in any of claims 8 to 10, wherein cut material arising during film production is reintroduced as regrind to the extrusion process in amounts in the range from 20 to 60 % by weight, based on the total weight of the film.

12. The use of a multilayer, transparent film as claimed in any of claims 1 to 7 in flexible packaging, in particular on high-speed packaging machinery, or in the industrial sector, in particular for stamping applications.


**Revendications**

1. Feuille polyester multicouche transparente à orientation biaxiale avec une épaisseur totale de 3 à 30 $\mu$m composée d'au moins une couche de base (B), qui contient au moins 80 % en poids de polyester thermoplastique, et d'au moins une couche de recouvrement (A) brillante transparente appliquée sur cette couche de base (B), dans laquelle la couche de recouvrement transparente (A) contient en outre un système de pigmentation en une quantité dans la plage de 0,05 à 0,5 % en poids, par rapport au poids total de la couche de recouvrement (A), **caractérisée en ce que** le système de pigmentation présente les caractéristiques suivantes :

   a) le diamètre de grains moyen (valeur $d_{50}$) se situe dans la plage de 1,5 à 5 $\mu$m et
   b) la dispersion de la répartition des tailles de grains, exprimée par le SPAN 98, est inférieure/égale à 1,9.

2. Feuille polyester multicouche transparente selon la revendication 1, **caractérisée en ce que** la couche de recouvrement transparente (A) contient un système de pigmentation qui présente un diamètre de grains moyen (valeur $d_{50}$) dans la plage de 1,6 à 4,9, de préférence dans la plage de 1,7 à 4,8 $\mu$m.

3. Feuille polyester multicouche transparente selon la revendication 1 ou 2, **caractérisée en ce que** la couche transparente (A) contient un système de pigmentation qui présente un SPAN 98 inférieur/égal à 1,8, de préférence inférieur/égal à 1,7.

4. Feuille polyester multicouche transparente selon l'une quelconque des revendications 1 à 3, **caractérisée en ce qu'**elle possède une structure en trois couches avec une couche de base (B) et des couches de recouvrement (A) et (C) disposées des deux côtés de la couche de base (B), **en ce qu'**elle possède une épaisseur totale dans la plage de 5 à 30 $\mu$m, **en ce que** l'épaisseur des couches de recouvrement (A) et (C) se situe dans la plage de 0,1 à 5 $\mu$m et **en ce que** les couches de recouvrement (A) et (C) peuvent avoir une épaisseur identique ou différente.

5. Feuille polyester multicouche transparente selon l'une quelconque des revendications 1 à 4, **caractérisée en ce que** son brillant est supérieur/égal à 170 et sa turbidité est inférieure/égale à 2,5 %.

6. Feuille polyester multicouche transparente selon l'une quelconque des revendications 1 à 5, **caractérisée en ce que** sa rugosité, exprimée comme étant sa valeur $R_a$, se situe dans la plage de 30 à 150 nm, de préférence de 35 à 140 nm, plus préférablement de 40 à 130 nm et **en ce que** sa valeur de mesure de l'écoulement de gaz en surface se situe dans la plage de 4 à 200 s, de préférence de 5 à 180 s.

7. Feuille polyester multicouche transparente selon l'une quelconque des revendications 1 à 6, **caractérisée en ce que** l'orientation planaire $\Delta$p de la feuille est supérieure/égale à 0,165, de préférence supérieure/égale à 0,166, le plus préférablement supérieure/égale à 0,167.

8. Procédé de fabrication d'une feuille polyester multicouche transparente selon l'une quelconque des revendications 1 à 7 selon le procédé de coextrusion, dans lequel le polyesters des couches respectives est d'abord comprimé, fluidifié puis homogénéisé dans des extrudeuses, dans lequel les additifs prévus le cas échéant en tant qu'adjuvants peuvent déjà être contenus dans le polymère respectif, et dans lequel les matières fondues sont ensuite pressées par une filière pour feuilles multicouche, et la matière fondue pressée multicouche est tirée sur un ou plusieurs cylindres de tirage et solidifiée en une ébauche de feuille, l'ébauche de feuille solidifiée est ensuite étirée biaxialement, la feuille étirée biaxialement est thermofixée et subit le cas échéant un traitement par effet couronne ou à la flamme supplémentaire sur la surface prévue pour le traitement, **caractérisé en ce que** la température lors de l'étirement longitudinal est réglée dans la plage de 80 à 130 °C et lors de l'étirement transversal dans la plage de 90 à 150 °C et **en ce que** le rapport d'étirement longitudinal se situe dans la plage de 2,5/1 à 6/1, de préférence de 3/1 à 5,5/1, et le rapport d'étirement transversal se situe dans la plage de 3,0/1 à 5,0/1, de préférence de 3,5/1 à 4,5/1.

9. Procédé selon la revendication 8, **caractérisé en ce que** la feuille, après l'étirement, est maintenue pendant une durée dans la plage de 0,1 à 10 s à une température de 150 à 250 °C puis thermofixée.

10. Procédé selon la revendication 8 ou 9, **caractérisé en ce qu'**en outre une ou les deux surfaces de la feuille subissent un traitement par effet couronne ou à la flamme, dans lequel l'intensité de traitement est réglée de sorte qu'est générée une tension de surface de la feuille dans la plage supérieure/égale à 45 NM/m.

11. Procédé selon l'une quelconque des revendications 8 à 10, **caractérisé en ce que** les déchets qui résultent de la fabrication de la feuille peuvent refaire l'objet d'une extrusion en tant que produit récupéré en une quantité dans la plage de 20 à 60 % en poids, par rapport au poids total de la feuille.

12. Utilisation d'une feuille multicouche transparente selon l'une quelconque des revendications 1 à 7 pour l'emploi dans un emballage souple, notamment sur des machines d'empaquetage rapides, ou dans l'industrie, notamment pour des applications d'estampage.

**Fig. 1**

Ausschnitt

Kundenrolle
mit Längsrillen

Kundenrolle mit Längsrillen

Φ (D)

100%

50%

**Fig. 2**

$D_{50}$

D

Φ (D)

100%

98%

10%

**Fig. 3**

$D_{10}$          $D_{98}$

D

**IN DER BESCHREIBUNG AUFGEFÜHRTE DOKUMENTE**

**In der Beschreibung aufgeführte Patentdokumente**

- EP 0347646 A
- EP 0514129 A
- EP 0604057 A
- DE 1694404 A
- EP 0061769 B
- EP 0088635 B
- EP 0502745 B
- JP 11322970 A
- US PS3154461 A